(19) Europäisches Patentamt
European Patent Office
Office européen des brevets

(11) EP 3 017 278 B1

(12) FASCICULE DE BREVET EUROPEEN

(45) Date de publication et mention
de la délivrance du brevet:
**08.08.2018 Bulletin 2018/32**

(21) Numéro de dépôt: **14749859.6**

(22) Date de dépôt: **01.07.2014**

(51) Int Cl.:
*G01D 1/04* (2006.01)    *G01D 5/04* (2006.01)
*G01B 5/30* (2006.01)    *G06M 1/04* (2006.01)
*G08G 1/065* (2006.01)    *G06M 3/00* (2006.01)

(86) Numéro de dépôt international:
**PCT/FR2014/000157**

(87) Numéro de publication internationale:
**WO 2015/001204 (08.01.2015 Gazette 2015/01)**

(54) **MICROCAPTEUR PASSIF ET RÉVERSIBLE AMPLIFIÉ DE DÉFORMATIONS**

VERSTÄRKTER PASSIVER UND UMKEHRBARER VERFORMUNGSMIKROSENSOR

AMPLIFIED PASSIVE AND REVERSIBLE MICRO-SENSOR OF DEFORMATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2013 FR 1301556**

(43) Date de publication de la demande:
**11.05.2016 Bulletin 2016/19**

(73) Titulaires:
• **Etat français représenté par le Délégué Général pour l'Armement**
**75509 Paris Cedex 15 (FR)**
• **Silmach**
**25000 Besançon (FR)**

(72) Inventeurs:
• **LOUVIGNÉ, Pierre-François**
**F-92700 Colombes (FR)**
• **MINOTTI, Patrice**
**F-25660 Gennes (FR)**
• **VESCOVO, Paul**
**F-25000 Besançon (FR)**
• **SADOULET, Vianney**
**F-25870 Venise (FR)**

(56) Documents cités:
EP-A2- 1 998 144    WO-A1-2012/153335
FR-A1- 2 857 770    FR-A1- 2 893 139
FR-A1- 2 974 410    US-A- 5 962 792

**Description**

La présente invention concerne le domaine des microcapteurs et a plus particulièrement pour objet un microcapteur apte à détecter et, préférentiellement aussi à compter, le nombre de cycles de variations de distance entre deux points ou zones d'une structure soumise à une action extérieure répétée, par exemple des cycles de températures ou de contraintes mécaniques comme par exemple le nombre de passages de véhicules sur un pont, générant un niveau de contrainte connu dans la structure.

Dans ce domaine, on connait la demande de brevet EP1998145 qui décrit un microcapteur passif et réversible de comptage du nombre de cycles de sollicitations subis par une structure pouvant par exemple correspondre au nombre de cycles de température, de sollicitations mécaniques en traction, compression et/ou flexion engendré, par exemple, par le passage de mobiles sur cette structure dont, avantageusement, la taille n'excède pas 5 cm pour sa plus grande dimension, et préférablement 2 cm, et présentant une durée de vie quasiment illimitée, pouvant être utilisé en sécurité pyrotechnique, ne présentant aucune sensibilité aux champs électromagnétiques et qui permette un comptage sans erreur de ce nombre de cycles ou de passages.

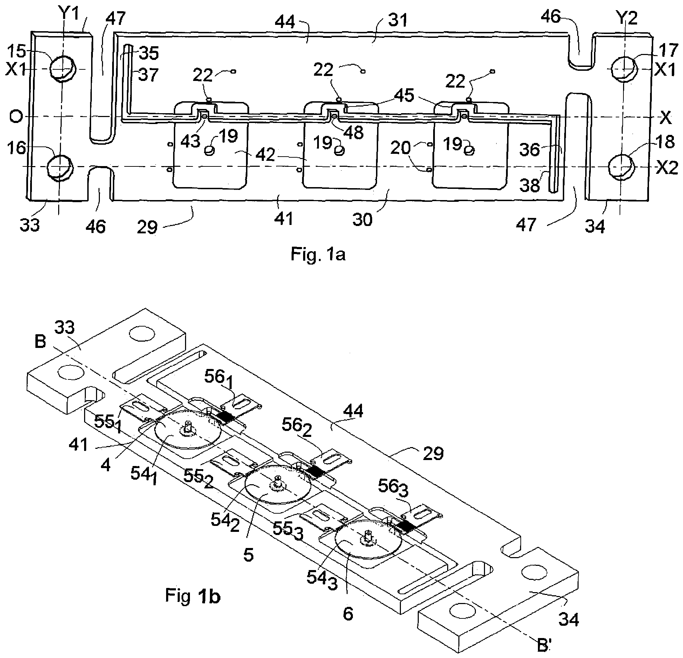

Par réversible, il faut entendre un microcapteur apte à détecter un cycle de variations de distance sans se détériorer, donc apte ensuite à détecter un autre cycle. Par moyens passifs, il faut comprendre des moyens fonctionnant sans source d'énergie contrairement aux moyens, dits actifs, utilisés dans les demandes de brevets susmentionnées et qui utilisent une source d'énergie, à savoir une alimentation électrique. Ce microcapteur comporte des moyens de détection et de comptage des cycles de variations de distance entre deux points ou zones d'une structure, ces moyens comportant un support possédant une première et une seconde parties possédant chacune une zone d'ancrage, ces zones d'ancrage étant aptes à être fixées respectivement à l'une et à l'autre desdits deux points ou zones de la structure et étant constituées par des plots, des encoches et/ou des alésages et étant de dimensions plus faibles que celles des première et seconde parties, les moyens de comptage étant associés à chacune des dites première et seconde parties du support. On connait aussi la demande de brevet FR2974410 qui décrit un microcapteur passif et réversible de comptage du nombre de cycles de sollicitations subis par une structure et apte à détecter plusieurs seuils différents de sollicitations. Un tel microcapteur est montré sur les figures 1a et 1b, respectivement sans et avec des moyens de détection et des moyens de comptage.

Il comporte un support 29 avec un premier et un second sous-ensembles 30, 31 en forme de L disposés tête bêche et séparés principalement longitudinalement selon un axe OX par un espace 32 et dont les bases respectives 33, 34 sont, en partie, des zones d'ancrage du support 29 sur la structure à surveiller.

Ces bases 33, 34 comportent chacune deux alésages 15, 16 et 17, 18. Les axes Y1 et Y2 passant respectivement par les centres des alésages 15,16 et 17, 18 sont perpendiculaires à l'axe OX Tandis que les axes X1 et X2 passant respectivement par les centres des alésages 15,17 et 16, 18 sont parallèles à l'axe OX. En outre, ces première et seconde parties longitudinales 41 ; 44 sont reliées entre-elles, à leurs extrémités 37, 38 par un élément élastique, en l'occurrence un cordon de matière 35 et 36.

La seconde partie 41 du premier sous-ensemble 30 comporte trois alésages 19 régulièrement répartis le long de l'axe OX ainsi que trois couples d'alésages 20, l'axe passant par les centres d'un couple d'alésages étant parallèle à l'axe Y1 et chacun des couples est associé à l'un des alésages 19. Chaque alésage 20 est destiné à recevoir un axe dépassant du support et apte à permettre un prépositionnement de moyens anti-retour.

Cette seconde partie 41 comporte autant de dépressions 42 de forme sensiblement carrée que d'alésages 19, chaque dépression étant centrée autour de l'un des alésages 19. Elle comporte aussi trois créneaux 43 dépassant de la surface latérale de la seconde partie 41 du premier sous-ensemble 30 située en regard de seconde partie 44 du second sous-ensemble 31. Pour chacun des alésages 19, l'axe passant par son centre et parallèle à l'axe Y1 est aussi un axe de symétrie de l'un des créneaux 43. Chacun de ces créneaux comporte, dans sa partie médiane, un alésage 48. La seconde partie 44 du second sous-ensemble 31 comporte trois couples d'alésages 22 répartis de-même que les alésages 19 selon l'axe OX, chacun des couples 22 étant associé à l'un des alésages 19. Chaque alésage 22 est destiné à recevoir un axe dépassant du support et apte à permettre un prépositionnement de moyens d'entrainement. De plus, la surface latérale de la seconde partie 44 du second sous-ensemble 31 située en regard de la seconde partie 41 du premier sous-ensemble 30 comporte des encoches 45 de dimensions supérieures à celles des créneaux 43 et destinées à permettre l'introduction des créneaux à l'intérieur. Chacune des bases 33, 34 est partiellement séparée de la seconde partie du L correspondante par deux encoches 46, 47 coaxiales et se faisant face.

Les petites encoches 46 ne sont pas absolument indispensables, néanmoins elles présentent les avantages suivants : - faciliter la rotation des 2 zones d'ancrage l'une par rapport à l'autre. En effet, lorsque le témoin est monté sur une structure soumise à de la flexion, il y a rotation des sections droites. Une telle architecture, en apportant de l'élasticité (compliance), permet donc d'éviter de faire croître les contraintes inutilement. - centrer la base par rapport à la seconde partie mobile correspondante du support, - laisser uniquement, au niveau des bases, la matière nécessaire pour supporter les sollicitations en traction ou compression.

Les grandes encoches 47 permettent de créer les éléments élastiques, à savoir des cordons de matière 35, 36 de solidarisation des sous-ensembles 30, 31 entre eux. La figure 1b montre une vue en perspective du support de la figure la sur lequel ont été disposés des moyens de détection et des moyens de comptage. Sur le support 29, sont disposés trois ensembles 4, 5, 6 comportant chacun :

- des axes emmanchés en force dans les alésages 19, 20, et 22 et dépassant du support 29 et servant de butée ou d'axe de rotation,

- une roue dentée $54_1$, $54_2$ ou $54_3$, -des moyens anti- retour $55_1$, $55_2$ ou $55_3$ - des moyens d'entrainement $56_1$, $56_2$ ou $56_3$.

Afin de permettre la détection de plusieurs seuils de déformations différents, les roues dentées $54_1$, $54_2$ ou $54_3$ présentent un pas de dents différent d'une roue à l'autre.

Les dispositifs selon ces brevets sont dimensionnés en fonction de la déformation attendue et des limites technologiques de fabrication des différents éléments constitutifs dont, principalement, le pas des dents des roues de comptage, la résolution étant au plus égale à ce pas.

Ainsi pour un pas de dents donné, plus la déformation à détecter et à compter sera petite et plus la taille du microcapteur sera grande et donc son poids sera important.

Or, dans certains secteurs, comme le domaine aéronautique, la masse des composants doit être la plus faible possible. Par conséquent, la taille des microcapteurs doit être la plus faible possible compatible avec la détection et le comptage des déformations.

Par ailleurs, l'utilisation du silicium pour la fabrication des roues de comptage permet d'obtenir un pas de dents très petit, de l'ordre de $100\mu m$, voire moins. Cependant, la technologie de fabrication de roues en silicium est complexe et il peut être, dans certains cas, préférable d'utiliser une technologie plus simple comme celle de métaux. Cependant, avec des métaux, on atteint, au mieux, un pas de dents de l'ordre de $400\mu m$ ce qui nécessite, pour une même valeur de déformation détectée et comptée, de mettre en oeuvre des supports au moins quatre fois plus grands que dans le cadre des roues de comptage en silicium. En effet, pour les déformations de très faible amplitude, les inventions précédentes présentent une architecture dont la partie mobile qui sert à engrener la roue de comptage se déplace avec une amplitude proche de celle du déplacement associé à l'événement. Si l'événement est de très faible amplitude, la course de la partie mobile peut être insuffisante pour provoquer l'engrènement. Cette limitation est liée au rapport du nombre de dent sur le diamètre de la dent.

Le but de l'invention est de résoudre les inconvénients précités en proposant un microcapteur passif et réversible de comptage du nombre de cycles de sollicitations subies par une structure permettant, par rapport à ceux décrits dans les demandes de brevet EP1998145 et FR2974410, d'une part de réduire leur taille, donc leur encombrement surfacique, d'un facteur préférablement au moins égal à 4, pour une taille de microcapteur données et d'autre part, de détecter et compter des valeurs de déformations subies par une structure au moins quatre fois plus faible que celles détectées et comptées avec un microcapteur selon les demandes de brevets susmentionnées. Ainsi, dans certains cas, il sera possible d'utiliser la technologie des métaux pour réaliser les moyens de comptage, cette dernière étant beaucoup plus simple que celle du silicium.

La solution apportée est un microcapteur passif et réversible de déformations selon une direction longitudinale OX d'une structure notamment lors de cycles de températures ou de contraintes mécaniques subis par cette structure, ce microcapteur comportant des moyens de détection et de comptage des cycles de variations de distance entre deux points ou zones d'une structure ainsi que :

- un support comprenant :

  - une première partie possédant une zone d'ancrage apte à être fixée à un premier desdits deux points ou zones de la structure,
  - une seconde partie possédant une zone d'ancrage apte à être fixée au second desdits deux points ou zones de la structure,
  - une troisième partie disposée longitudinalement entre la première partie et ledit second desdits deux points ou zones de la structure et fixée par une première extrémité longitudinale à la première partie,
  - une quatrième partie disposée longitudinalement entre la seconde partie et ledit premier desdits deux points ou zones de la structure et fixée par une première extrémité longitudinale à la seconde partie,

- des moyens de détection et de comptage des cycles de variations de distance entre lesdits deux points ou zones d'une structure comportant :

  - au moins une première roue dentée de comptage disposée sur l'une desdites première, seconde, troisième ou quatrième parties,

- au moins une troisième poutre fixée au support et comportant une dent à son extrémité libre, cette dent étant apte à s'engrener sur ladite roue dentée, le support comportant des moyens d'amplification de la valeur d'un déplacement relatif entre lesdites première et seconde parties du support, ces moyens comportant :

  - une première poutre fixée à l'une de ses extrémités à la troisième partie et à son autre extrémité à une première plaque,
  - une seconde poutre fixée à l'une de ses extrémités à la quatrième partie et à son autre extrémité à ladite première plaque,

  et en ce que la troisième poutre est fixée d'un côté à ladite plaque, ou à un élément qui lui est solidaire, ladite plaque et les première, seconde et troisième poutres étant agencées de sorte que toute variation de distance $\Delta x$ entre lesdites première et seconde parties du support produisent un déplacement correspondant $\Delta y$ de la plaque selon une direction différente et avec $\Delta y > \Delta x$ et, préférablement, $\Delta y > 4\Delta x$. Plus précisément, l'invention concerne un microcapteur passif et réversible de déformations selon une direction OX d'une structure notamment lors de cycles de températures ou de contraintes mécaniques subis par cette structure, ce microcapteur comportant

- un support comprenant :

  - une première partie possédant une zone d'ancrage apte à être fixée à l'un desdits deux points ou zones de la structure,
  - une seconde partie possédant une zone d'ancrage apte à être fixée à l'autre desdits deux points ou zones de la structure,
  - une troisième partie disposée longitudinalement entre les première et seconde parties et reliée par une première extrémité longitudinale à la première partie par un élément élastique tel par exemple qu'un cordon épais,
  - une quatrième partie disposée longitudinalement entre les première et seconde parties et reliée par une première extrémité longitudinale à la seconde partie par un élément élastique tel par exemple qu'un cordon épais, cette première extrémité étant préférablement aussi reliée à la première extrémité longitudinale de la troisième partie par un premier cordon au moins en partie mince, et la seconde extrémité longitudinale de la troisième partie étant aussi préférablement reliée à la seconde extrémité longitudinale de la quatrième partie par un second cordon au moins en partie mince,

- des moyens de détection et de comptage des cycles de variations de distance entre deux points ou zones d'une structure comportant :

  - au moins une première roue dentée de comptage disposée sur l'une des troisième ou quatrième parties,
  - au moins une troisième poutre fixée au support et comportant une dent à son extrémité libre, cette dent étant apte à s'engrener sur ladite roue dentée, le support comportant des moyens d'amplification de la valeur d'un déplacement relatif entre lesdites première et seconde parties du support, ces moyens comportant :

    - une première poutre fixée à l'une de ses extrémités à la troisième partie et à son autre extrémité à une première plaque,
    - une seconde poutre fixée à l'une de ses extrémités à la quatrième partie et à son autre extrémité à ladite première plaque,

  et en ce que la troisième poutre est fixée d'un côté à ladite plaque, ou à un élément qui lui est solidaire, et ladite plaque et les première, seconde et troisième poutres étant agencées de sorte que tout déplacement relatif $\Delta x$ entre lesdites première et seconde parties du support produisent un déplacement correspondant $\Delta y$ de la plaque selon une direction différente et avec $\Delta y > \Delta x$ et, préférablement, $\Delta y > 4\Delta x$. Des cordons minces permettent de maintenir le positionnement des première, secondes troisième et quatrième parties pendant la phase de transport puis de fixation du support sur une structure tandis que des cordons de matière situés entre chaque cordon mince et le cordon épais correspondant jouent le rôle de ressort permettant ainsi le déplacement sans quasiment de contrainte des première et troisième parties par rapport aux secondes et quatrième parties. Par cordon mince ou épais, il faut entendre que le cordon mince est au moins deux fois moins large que le cordon épais et, préférablement au moins cinq fois moins large.

Par plaque, il faut entendre tout élément tridimensionnel dont au moins l'une de ses dimensions est très supérieure à au moins l'une des autres.

Selon une caractéristique additionnelle, le support comporte un plan médian longitudinal et les première et seconde poutres font un angle avec le plan médian compris entre 0 et 45 degrés.

Selon une caractéristique particulière, les première et seconde poutres sont disposées du même côté de la plaque.

Selon une caractéristique particulière, les première et seconde poutres sont parallèles entre-elles et, préférentiellement, la troisième poutre est disposée perpendiculairement aux deux premières. Ce système de poutres permet d'amplifier le mouvement initial d'un facteur de l'ordre de 5, ce facteur dépendant de la dimension de la plaque et de la distance entre les points de fixation des poutres sur ladite plaque.

Selon une caractéristique particulière permettant de minimiser le volume du microcapteur, la plaque et les première, seconde, troisième et quatrième parties du support sont disposées dans un même plan et, avantageusement, la première plaque est disposée entre les troisième et quatrième parties du support et délimitée par une gorge débouchante excepté au niveaux des liaisons aves lesdites première et seconde poutres.

Selon une caractéristique particulière, permettant de compter deux seuils différents de déformation, un microcapteur selon l'invention comporte :

- une première roue dentée disposée sur la troisième partie du support, la troisième poutre comportant une dent apte à s'engrener sur cette première roue dentée,
- une seconde roue dentée disposée sur la quatrième partie du support, une quatrième poutre disposée transversalement et fixée d'un côté à ladite plaque ou à un élément qui lui est solidaire et comportant, au niveau de son extrémité libre, une dent apte à s'engrener sur ladite seconde roue dentée.

Selon une autre caractéristique les première et seconde poutres longitudinales ont une longueur au moins égale à la moitié de celle des troisième et quatrième parties du support, les mesures étant effectuées selon la direction longitudinale du support.

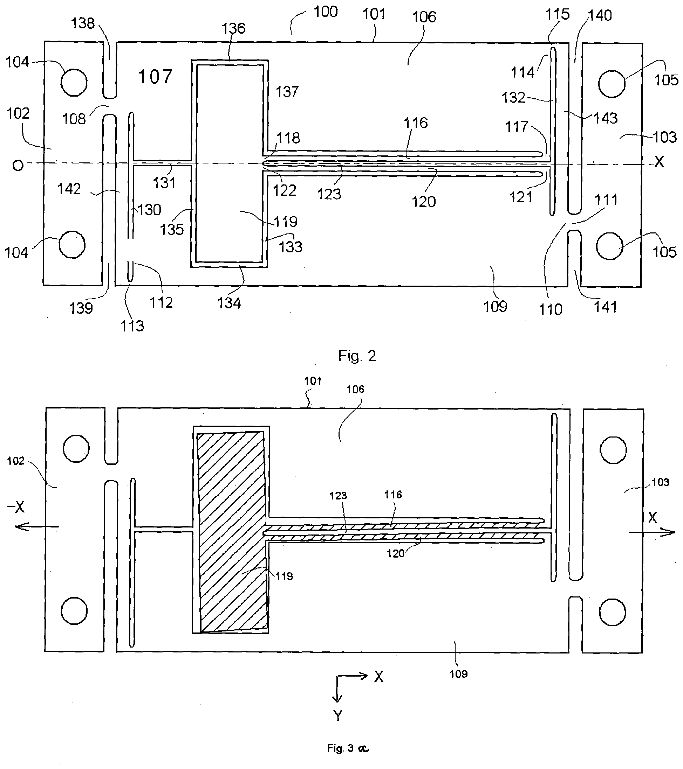

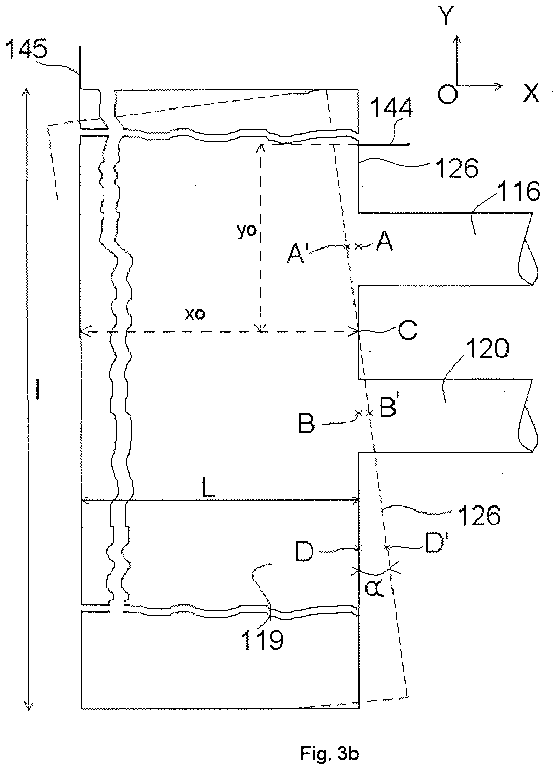

L'objectif de ce microcapteur est d'amplifier le déplacement relatif entre les deux fixations, dû à une sollicitation d'origine mécanique ou thermique, avec un encombrement jusqu'à cinq fois plus faible que celui d'un microcapteur selon l'état de la technique. Dans son fonctionnement, en supposant que l'une des fixations reste immobile et que l'autre fixation subisse un déplacement horizontal vers la droite, la première poutre va rester fixe tandis que la seconde va subir le même déplacement que la fixation correspondante. Les deux poutres étant reliées par l'intermédiaire de la platine de fixation - rigide -, celle-ci va subir un mouvement vertical (combinaison de rotation et de déplacement). C'est ce déplacement qui va être détecté et mesuré grâce à des roues de comptage. Un exemple de déformation de la platine est présenté en figure 3, lorsqu'une traction est exercée sur les extrémités des fixations.

Ce système de poutres permet d'amplifier le mouvement initial d'un facteur de l'ordre de 5.

Un microcapteur selon l'invention peut détecter et compter soit la survenance d'une déformation soit le nombre de cycle subi par une structure.

D'autres avantages et caractéristiques de l'invention apparaîtront dans la description de plusieurs variantes de réalisation de l'invention et au regard des figures annexées parmi lesquelles :

- La figure 2 montre un premier exemple d'un support d'un microcapteur selon l'invention,
- La figure 3 présente le même dispositif que celui de la figure 2 mais ayant subi une déformation,
- La figure 4 présente un support selon la figure 2 sur lequel ont été rapportés deux ensembles de moyens de détection et de comptage du nombre de cycles de déformations subies par une structure sur lequel il est fixé,
- La figure 5 montre un schéma plus détaillé du second ensemble de moyens de détection et de comptage selon la figure 4,
- La figure 6 montre un second exemple d'un support d'un microcapteur selon l'invention,
- La figure 7 montre un troisième exemple d'un support d'un microcapteur selon l'invention,
- La figure 8 montre un quatrième exemple d'un support d'un microcapteur selon l'invention.

La figure 2 montre un premier exemple d'un support 101 d'un microcapteur selon l'invention. Ce microcapteur passif et réversible de déformations selon une direction longitudinale OX d'une structure, notamment lors de cycles de températures ou de contraintes mécaniques subis par cette structure, est disposé longitudinalement selon la direction longitudinale OX de la structure et il comporte:

- un support 101 principalement plan et possédant :

    - une première et une seconde parties 102, 103 possédant chacune deux zones d'ancrage 104, 105, ces zones d'ancrage étant aptes à être fixées respectivement à l'une et à l'autre desdits deux points ou zones de la structure et étant constituées par des alésages circulaires débouchants,

- une troisième partie 106 disposée longitudinalement entre les première et seconde parties et reliée par une première extrémité longitudinale 107 à la première partie 102 par un cordon épais 108 et séparée de la première partie par des grandes encoches 138, 139,
- une quatrième partie 109 disposée longitudinalement entre les première et seconde parties 102, 103 et reliée par une première extrémité longitudinale 110 à la seconde partie 103 par un cordon épais 111, la seconde extrémité longitudinale 112 de la quatrième partie 109 étant aussi reliée à la première extrémité longitudinale 107 de la troisième partie 106 par un premier cordon mince 113, et la seconde extrémité longitudinale 114 de la troisième partie 106 étant reliée à la première extrémité longitudinale 110 de la quatrième partie par un second cordon mince 115. La quatrième partie est aussi séparée de la seconde partie par des grandes encoches 140, 141,

- des moyens d'amplification de la déformation subie par la structure porteuse comportant :

  - une première poutre 116 disposée longitudinalement et fixée à une première extrémité longitudinale 117 à la troisième partie 106 et à son autre extrémité longitudinale 118 à une première plaque 119,

  - une seconde poutre 120 disposée longitudinalement et parallèlement à la première et fixée à une première extrémité longitudinale 121 à la quatrième partie 109 et à son autre extrémité longitudinale 122 à ladite première plaque 119, les première et seconde poutres étant séparées par une gorge débouchante longitudinale 123,

Les troisième et quatrième parties sont séparées principalement par des gorges débouchantes 130, 131, 123, 132 et la première plaque 119 est séparée des troisième et quatrième parties par des gorges débouchantes 133, 134, 135, 136 et 137, ces gorges délimitant la plaque 119.

Les alésages 104, 105 ne sont pas absolument indispensables, néanmoins ils présentent les avantages suivants : - faciliter la rotation des 2 zones d'ancrage l'une par rapport à l'autre. En effet, lorsque le témoin est monté sur une structure soumise à de la flexion, il y a rotation des sections droites. Une telle architecture, en apportant de l'élasticité (compliance), permet donc :

- d'éviter de faire croître les contraintes inutilement,
- de centrer la base par rapport à la seconde partie mobile correspondante du support,
- de laisser uniquement, au niveau des bases, la matière nécessaire pour supporter les sollicitations en traction ou compression.

Les grandes encoches 138, 139, respectivement 140, 141, permettent de créer les éléments élastiques, à savoir les cordons épais de matière 108, respectivement 111 de solidarisation des première et troisième parties 102, 106, respectivement des seconde et quatrième parties 103, 109 entre elles. Ces cordons épais 108, 111 permettent de solidariser, respectivement, d'une part les première et troisième parties 102, 106 et, d'autre part les seconde et quatrième parties 103, 109 de sorte que lorsque la première partie 102 se déplace longitudinalement par rapport à la seconde partie 103, la troisième partie suit le mouvement de la première partie et se déplace de manière identique à cette dernière. En outre, ces cordons épais assure une élasticité transversale du support utile lorsque la première partie se déplace par rapport à la seconde 103 non seulement longitudinalement mais aussi transversalement.

Les cordons minces 113 et 115 permettent de maintenir le positionnement des première, secondes troisième et quatrième parties pendant la phase de transport puis de fixation du support sur une structure tandis que les cordons de matière 142, 143 situés entre chaque cordon mince et le cordon épais correspondant jouent le rôle de ressort permettant ainsi le déplacement sans quasiment de contrainte des première et troisième parties par rapport aux secondes et quatrième parties.

La figure 3a présente le même dispositif que celui de la figure 2 mais ayant subi une déformation, en l'occurrence un éloignement des première et secondes parties du support 100 comme le symbolise le sens des flèches. La déformation montrée est exagérée par rapport à la réalité et montrée plus en détail sur la figure 3b et ce, afin de faciliter la compréhension.

De plus, sur la figure 3a la première plaque 119 et les première et seconde poutres 116, 120 des moyens d'amplification ont été hachurés afin de faciliter la lecture de la figure tandis que sur la figure 3b, la position de la face latérale 126 de la plaque 119 après déformation est présentée en pointillés.

Par rapport à la figure 2, la première partie 102 s'est déplacée dans la direction (-X) d'une distance (-$\Delta$X) tandis que la seconde partie s'est déplacée dans la direction X d'une distance (+$\Delta$X), comme cela peut survenir par exemple lors d'un échauffement de la structure supportant le support 100.

On constate que le point A de la poutre 116 situé dans le plan médian de cette dernière à l'intersection avec la plaque 119 s'est aussi déplacé en translation d'une distance (- $\Delta X$) devenant alors le point A' tandis que le point B de la poutre 120 situé dans le plan médian de cette dernière à l'intersection avec la plaque 119 s'est aussi déplacé en translation mais d'une distance ($\Delta X$) devenant alors le point B', ces déplacements provoquant une rotation de la plaque et donc notamment de la face latérale 126 d'un angle $\alpha$ avec :

$$tg(\alpha) = BB'/CB = 2. (\Delta X)/AB \quad \text{avec C étant le point situé au milieu du segment AB.}$$

avec C étant le point situé au milieu du segment AB.

Pour tout point D situé au niveau de la face latéral 126 de la plaque 119 ou de sa face opposée, le déplacement de ce point après déformation sera égal à :

$$\Delta X_D = tg(\alpha).CD = 2.CD. (\Delta X)/AB$$

On constate donc que pour une variation de distance $\Delta X$ donnée, plus la distance AB est faible et plus l'amplification est importante. De même plus le point D est éloigné du point C et plus l'amplification est importante. Par contre, la longueur des poutres 116, 120 n'a pas d'influence. De même, le déplacement $\Delta Y_L$ suivant l'axe Y de la face latérale 127 opposée à la face latérale 126 de la plaque est égal à :

$$\Delta X_L = tg(\alpha).L = 2L. (\Delta X)/AB$$

Où L est la largeur de la plaque c'est-à-dire la distance séparant les faces 126 et 127.

On constate que si L est supérieure à la demi hauteur de la plaque 119, l'amplification du déplacement est supérieure selon l'axe Y que sur l'axe X et vice-versa. De plus, comme précédemment, plus la distance AB est faible et plus l'amplification est importante. De même, plus le point D est éloigné du point C et plus l'amplification est importante.

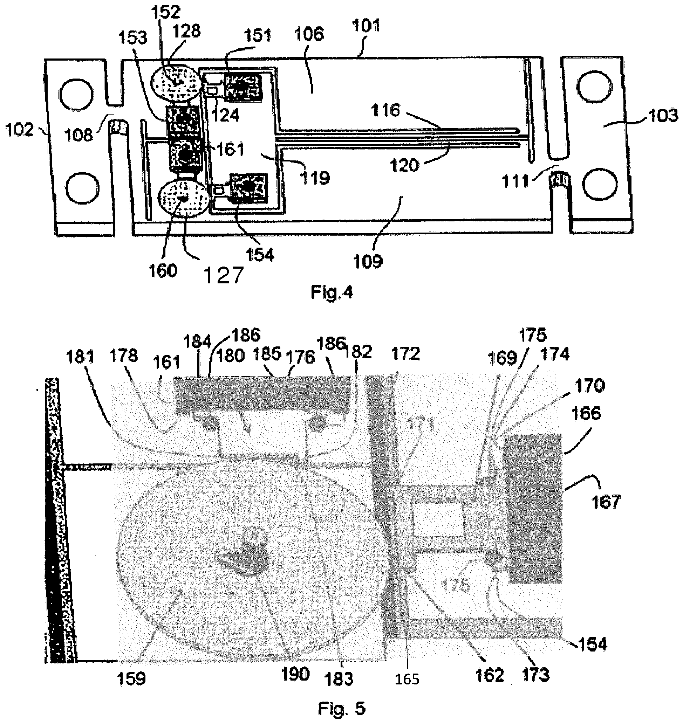

Ainsi, dans le cas où une poutre dentée 144 d'entraînement d'une roue dentée de détection et de comptage est fixée directement à la plaque selon la direction OX, alors pour obtenir un facteur d'amplification $\xi$, il est nécessaire de la fixer à une distance y0 du point C , selon l'axe OY, égale à $\xi$ .AB/2 tandis que dans le cas où une poutre dentée 145 d'entraînement d'une roue dentée de détection et de comptage est fixée directement à la plaque selon la direction OY alors pour obtenir un facteur d'amplification $\xi$, il est nécessaire de la fixer à une distance x0 de C, selon l'axe OX, égale à $\xi$ .AB/2. Les mêmes considérations s'appliquent lorsque la poutre dentée est fixée à un ensemble support lui-même fixé à la plaque comme montré sur la figure 5. Ainsi, le déplacement $\Delta X$ est au moins amplifié d'un facteur $\xi$. Il suffit ensuite de placer les moyens de détection en tenant compte de ces considérations pour amplifier les micro déplacements $\Delta X$ d'un facteur $\xi = \Delta X_L / \Delta X$ ou $\xi = \Delta X_D / \Delta X$.

La figure 4 présente un support selon la figure 2 sur lequel ont été rapportés deux ensembles de moyens de détection et de comptage 150, 160 du nombre de cycles de déformations subies par une structure sur lequel il est fixé.

Le premier ensemble de moyens de détection et de comptage 150, appelé premier moyens de détection dans la suite, comporte :

- un ensemble support 151 fixée sur la première plaque 119,
- une troisième poutre 124 disposée transversalement et dont une première extrémité est fixée à l'ensemble 151 tandis que sa seconde extrémité est libre et comporte une dent,
- une première roue dentée de comptage 128 disposée sur la troisième partie 106 et reliée à elle par une liaison pivot 152, la dent 127 de la troisième poutre 124 étant engrenée sur cette roue dentée 128,
- un dispositif anti-retour 153 de cette roue dentée 128 fixée sur la troisième partie 106 du support.

Le second ensemble de moyens de détection et de comptage 151, appelé second moyens de détection dans la suite, comporte :

- un ensemble support 154 fixée sur la plaque 119. Une quatrième poutre 162 disposée transversalement comporte une première extrémité 156 fixée d'un côté audit ensemble support 154 et sa seconde extrémité 157 est libre et comporte une dent,
- une seconde roue dentée de comptage 159 disposée sur la quatrième partie 109 et reliée à elle par une liaison pivot 160, la dent de la quatrième poutre 162 étant engrenée sur cette roue dentée 159,

- un dispositif anti-retour 161 de cette roue dentée 159 fixée sur la quatrième partie 109 du support.

Dans cet exemple de réalisation, les première et seconde roues dentées ont le même diamètre mais un nombre de dents différent, à savoir 1000 pour la première et 500 pour la seconde 159, l'une ayant ainsi un pas p2 deux fois plus petit que celui p1 de l'autre. Ainsi, la déformation $\Delta x$ subie par la structure sera détectée ou non en fonction de sa valeur, de celle du pas et du taux d'amplification $\zeta$ de la déformation généré par le microcapteur comme indiqué dans le tableau ci-après.

| Déformation $\Delta x$ | Inférieure à (p1/$\zeta$) | Comprise entre (p1/$\zeta$) et (p2/$\zeta$) | Supérieure à (p2/$\zeta$) |
|---|---|---|---|
| Roue 128 | Non détection | Détection | Détection |
| Roue 159 | Non détection | Non détection | Détection |

La figure 5 montre un schéma plus détaillé du second ensemble de moyens de détection et de comptage 154.
Cet ensemble support 154 comporte une seconde plaque 166 dont l'une des faces principales est fixée à la plaque 119 par des axes 167 emmanchés de force dans l'épaisseur des deux plaques. L'une 170 des faces latérales de la seconde plaque 166 sert d'appui et de positionnement d'une première face latérale 168 d'une troisième plaque 169 sensiblement rectangulaire et évidée. Une deuxième face latérale 171 opposée à ladite première face 168, comporte, sur l'un de ses côté un prolongement 172 au bout duquel est fixée ladite quatrième poutre 162. La troisième plaque 169 comporte 2 pattes latérales 173, 174 auxquelles sont associés des axes 175 emmanchés dans la première plaque 119 et placés perpendiculairement à la troisième plaque, maintenant cette dernière contre la face latérale 170 de la seconde plaque 166.
Le dispositif anti-retour 161 de cette roue dentée 159 comporte une quatrième plaque 176 dont l'une des faces principales est fixée à la première plaque 119 par des axes emmanchés à force dans l'épaisseur des deux plaques. L'une 178 des faces latérales de la troisième plaque 176 sert d'appui et de positionnement d'une première face latérale d'une cinquième plaque 180 sensiblement rectangulaire. La deuxième face latérale 181 opposée à ladite première face 179, comporte, sur l'un de ses côté un prolongement 182 au bout duquel est fixée une cinquième poutre 183 dont l'extrémité libre comporte une dent. La cinquième plaque 180 comporte 2 pattes latérales 184, 185 auxquelles sont associés des axes 186 emmanchés dans la plaque 119 et placés perpendiculairement à la seconde plaque, la maintenant contre la face latérale 178 de la troisième plaque 176.
La roue dentée 159 est disposée parallèlement à la quatrième partie 109 du support et reliée à cette dernière par une liaison pivot 190 et placée de sorte à ce que la dent 165 de la quatrième poutre 162 ainsi que celle de la cinquième poutre 183 s'engrènent sur celles de la roue dentée 159.
La dent de la quatrième poutre d'entraînement 162 présente une face d'entraînement qui vient en contact avec une dent de la roue dentée 159 pour entrainer cette roue en rotation lors d'un déplacement dans un sens de la plaque 119 et une face de guidage autorisant le glissement, et donc l'escamotage, de la dent 165 sur celle de la roue dentée 159 lors d'un déplacement dans le sens opposé au précédent dans la mesure ou la roue dentée 159 est alors bloquée par les moyens anti-retour 161. La poutre d'entraînement 162 présente une élasticité suffisante pour permettre l'escamotage d'une dent sans détérioration. De plus, les poutres d'entraînement et d'anti-retour, respectivement 162 et 183, présentent une flèche lorsqu'elles sont en place contre la roue dentée 159. Cette déformation initiale permet de garantir le contact et donc l'engrènement malgré les défauts et incertitudes de fabrication/assemblage.
Pour le comptage des cycles de déformation, chaque roue dentée comporte à sa périphérie une numérotation de 0 à 980 avec un incrément de 20 dents pour la première roue dentée 128 et une numérotation de 0 à 480 avec un incrément de 20 dents pour la seconde roue dentée 159 tandis que la troisième partie 106, respectivement la quatrième partie 109, comporte une gravure rectiligne disposée suivant le rayon des roues et au niveau de laquelle est placée, pour chacune des roues, la numérotation 0 lors de l'insertion de ces roues sur leur liaison pivot correspondante. En cours d'utilisation, il suffit d'effectuer une lecture visuelle, pour chaque roue, de la numérotation figurant au niveau de la gravure rectiligne.
Dans cet exemple de réalisation le support et les moyens de comptage sont réalisés en silicium.
Pour une valeur de cycle de déformation donnée, un microcapteur selon l'invention aura une taille 5 fois plus petite que celle d'un microcapteur selon la demande de brevet FR2974410.
Ce microcapteur 100 est totalement passif, et c'est l'événement lui-même (action d'un objet apte à fléchir une structure) qui fournit l'énergie nécessaire à l'activation des fonctions de détection et de comptage. Dans le cas présent, le microcapteur est mis en service pour une durée qui n'est pas limitée par la durée de vie de la source d'énergie. Compte tenu de la nature même des matériaux utilisés, en l'occurrence du silicium, l'espérance de vie du microcapteur est dans tous les cas très supérieure à celle de tous les systèmes d'arme ou autres y compris pour des systèmes passifs stockés pour de très longues périodes. Dans le cas présent, le caractère inerte du compteur permet d'envisager de l'appliquer sur un système fonctionnant en sécurité pyrotechnique, ce qui procure une avancée considérable par rapport aux capacités actuelles. De plus, un microcapteur selon l'invention est totalement insensible aux champs électromagnétiques. De plus, il permet de simplifier le montage : moins d'implantations (Nombre de trous taraudés, de collages, de brides), de réduire le coût et d'augmenter la discrétion. En outre, la solution proposée est très simple à mettre en oeuvre et son fonctionnement très fiable. Il est indépendant d'une source d'énergie, discret, et d'un coût unitaire faible. En outre, la dent de la poutre anti-retour peut être remplacée par un patin de frottement apte à appliquer une force de frottement sur la roue dentée de comptage. Son rôle est double. Dans les deux cas, c'est la force de frottement du patin sur la roue qui lui permet de jouer son rôle. Cette force de frottement est déterminée par la précontrainte de la poutre patin. Il limite d'une part une rotation excessive due à des effets inertiels de la roue de comptage dans le sens normal de rotation. Il empêche d'autre part une rotation de la roue de comptage dans le sens inverse du sens normal lors du retour de la dent d'entraînement, pour peu que la force de frottement du patin soit supérieure à celle de la poutre d'entraînement sur la roue. Par ailleurs, dans le cas où l'on souhaite compenser les différences de dilatations thermiques entre le microcapteur et la structure, il est, d'une part, préférable de réaliser les supports du microcapteur en une matière dont le coefficient de dilatation thermique est proche de celui du matériau de la structure, et, d'autre part, de compenser géométriquement, via la forme des dites première et seconde partie du support et le positionnement de la roue de comptage, cette dilatation thermique

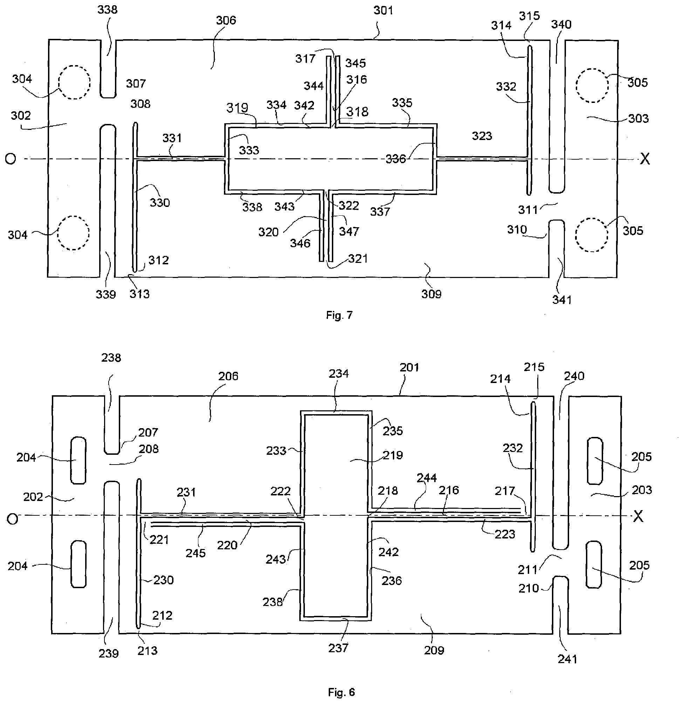

La figure 6 montre un second exemple d'un support 201 d'un microcapteur selon l'invention. Ce microcapteur passif et réversible de déformations selon une direction longitudinale OX d'une structure, notamment lors de cycles de températures ou de contraintes mécaniques subis par cette structure, est disposé longitudinalement selon cette direction longitudinale OX. Il comporte un support et des moyens de détection et de comptage des cycles de variations de distance entre deux points ou zones d'une structure, le support 201 étant principalement plan et possédant :

- une première et une seconde parties 202, 203 possédant chacune deux zones d'ancrage 204, 205, ces zones d'ancrage étant aptes à être fixées respectivement à l'une et à l'autre desdits deux points ou zones de la structure et étant constituées par des encoches oblongues débouchantes,
- une troisième partie 206 disposée longitudinalement entre les première et seconde parties et reliée par une première extrémités longitudinales 207 à la première partie 202 par un élément élastique à savoir un cordon épais 208 et séparée de la première partie par des grandes encoches 238, 239,
- une quatrième partie 209 disposée longitudinalement entre les première et seconde parties 202, 203 et reliée par une première extrémités longitudinales 210 à la seconde partie 203 par un cordon épais 211, la seconde extrémité longitudinale 212 de la quatrième partie 209 étant aussi reliée à la première extrémités longitudinales 207 de la troisième partie 206 par un premier cordon mince 213, et la seconde extrémité longitudinale 214 de la troisième partie 206 étant reliée à la première extrémité longitudinale 210 de la quatrième partie par un second cordon mince 215. La quatrième partie est aussi séparée de la seconde partie par des grandes encoches 240, 241,
- des moyens d'amplification de la déformation subie par la structure porteuse comportant :

  - une première poutre 216 disposée longitudinalement et fixée à une première extrémité longitudinale 217 à la troisième partie 206 et à son autre extrémité longitudinale 218 à une première face latérale 242 d'une plaque 219,

  - une seconde poutre 220 disposée longitudinalement et parallèlement à la première et fixée à une première extrémité longitudinale 221 à la quatrième partie 209 et à son autre extrémité longitudinale 222 à une deuxième face latérale 243 de ladite plaque 219 opposée à la première face latérale 242, les première et seconde poutres étant parallèles et placées l'une d'un côté et l'autre de l'autre côté du plan médian longitudinal du support.

La première poutre 216 est délimitée longitudinalement par deux gorges 223, 244 tandis que la seconde poutre 220 est délimitée longitudinalement par deux gorges 231, 245.

Les troisième et quatrième parties sont séparées principalement par des gorges débouchantes 230, 231, 223, 232 et la plaque 219 est séparée des troisième et quatrième parties par des gorges débouchantes 233, 234, 235, 236, 237 et 238, ces gorges délimitant la plaque 219.

Les moyens de détection et de comptage décrits dans le cadre des figures 4 et 5 peuvent être utilisés de la même manière dans le cadre de cette figure 6.

La figure 7 montre un troisième exemple d'un support 301 d'un microcapteur selon l'invention. Ce microcapteur passif et réversible de déformations selon une direction longitudinale OX d'une structure, notamment lors de cycles de températures ou de contraintes mécaniques subis par cette structure, comporte un support et des moyens de détection et de comptage des cycles de variations de distance entre deux points ou zones d'une structure, le support 301 étant principalement plan et possédant :

- une première et une seconde parties 302, 303 possédant chacune deux zones d'ancrage 304, 305, ces zones d'ancrage étant aptes à être fixées respectivement à l'une et à l'autre desdits deux points ou zones de la structure et étant constituées par des plots représentés en pointillés car situés sur la face arrière du support,

- une troisième partie 306 disposée longitudinalement entre les première et seconde parties et reliée par une première extrémité longitudinale 307 à la première partie 302 par un élément élastique à savoir un cordon épais 308 et séparée de la première partie par des grandes encoches 338, 339,

- une quatrième partie 309 disposée longitudinalement entre les première et seconde parties 302, 303 et reliée par une première extrémité longitudinale 310 à la seconde partie 303 par un cordon épais 311, la seconde extrémité longitudinale 312 de la quatrième partie 309 étant aussi reliée à la première extrémité longitudinale 307 de la troisième partie 306 par un premier cordon mince 313, et la seconde extrémité longitudinale 314 de la troisième partie 306 étant reliée à la première extrémité longitudinale 310 de la quatrième partie par un second cordon mince 315. La quatrième partie est aussi séparée de la seconde partie par des grandes encoches 340, 341,

- une première poutre 316 disposée transversalement et fixée au niveau d'une première extrémité longitudinale 317 à la troisième partie 306 et à son autre extrémité longitudinale 318 à une première face latérale 342 d'une première plaque 319,

- une seconde poutre 320 disposée transversalement et parallèlement à la première et fixée à une première extrémité longitudinale 321 à la quatrième partie 309 et à son autre extrémité longitudinale 322 à une deuxième face latérale 343 de ladite plaque 319 opposée à la première face latérale 342, les première et seconde poutres étant parallèles et placées l'une d'un côté et l'autre de l'autre côté du plan médian transversal du support.

La première poutre 316 est délimitée longitudinalement par deux gorges 344, 345 tandis que seconde poutre 320 est délimitée longitudinalement par deux gorges 346, 347.

Les troisième et quatrième parties sont séparées principalement par des gorges débouchantes 330, 331, 323, 332 et la plaque 319 est séparée des troisième et quatrième parties par des gorges débouchantes 333, 334, 335, 336, 337 et 338, ces gorges délimitant la plaque 319.

Les moyens de détection et de comptage décrits dans le cadre des figures 4 et 5 peuvent être utilisés mais décalés d'un angle de $\pi/2$ Rd, les troisième et quatrième poutres des moyens de comptage étant disposés longitudinalement.

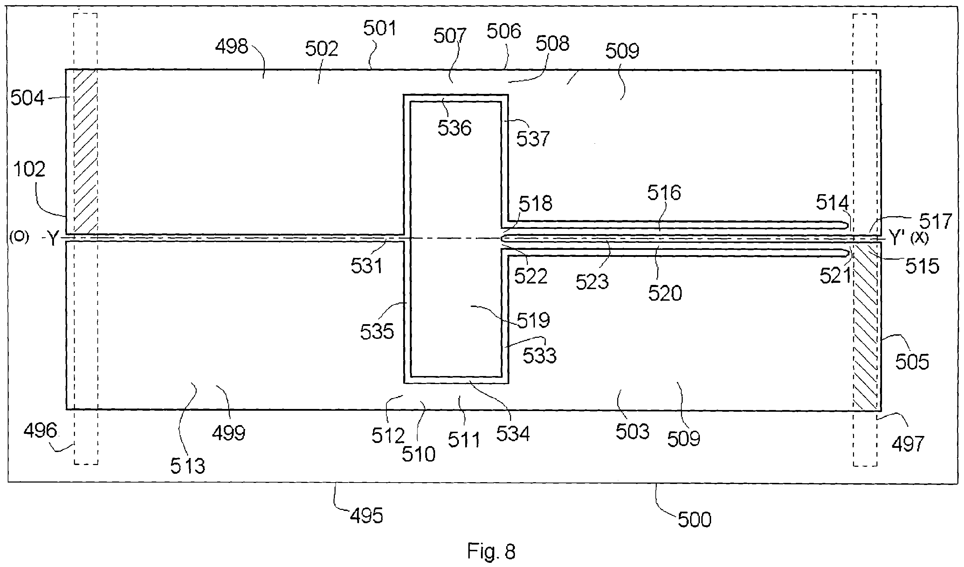

La figure 8 montre un autre exemple d'un support 501 d'un microcapteur passif et réversible selon l'invention. Ce microcapteur comporte :

a) des moyens de détection et de comptage, non représentés sur cette figure mais comparables à ceux des figures 4 et 5, des cycles de variations de distance entre des première et seconde zones 495, 496 d'une structure 497,

b) un support 501 principalement plan et symétrique par rapport à un plan médian longitudinal YY' destiné à être positionné selon une direction longitudinale OX de la structure et possédant deux ensembles 498, 499 en forme de U disposées tête bêche,

c) des moyens d'amplification de la déformation subie par la structure 497.

Le premier ensemble 498 du support 501 comporte une première partie 502 en forme de L renversé et destinée à être ancrée, au niveau d'une première extrémité longitudinale 504 et comme représenté par des hachures, à ladite première zone 495 tandis que sa seconde extrémité longitudinale 506 comporte une bande 507 en forme de cordon épais et moins large transversalement et constitutive de la base du U et dont l'extrémité 508 longitudinale opposée est reliée à une troisième partie 509 constitutive de la seconde branche du U et disposée longitudinalement entre les première et seconde zones 495, 496 de la structure 497.

Le second ensemble 499 du support 501 comporte une deuxième partie 503 en forme de L renversé et destinée à être ancrée, au niveau d'une première extrémité longitudinale 505 et comme représenté par des hachures, à ladite seconde zone 496 tandis que sa seconde extrémité longitudinale 510 comporte une bande 511 en forme de cordon épais et moins large transversalement et constitutive de la base du U et dont l'extrémité 512 longitudinale est reliée à une quatrième partie 513 constitutive de la seconde branche du U et disposée longitudinalement entre les première et seconde zones 495, 496 de la structure 497.

Il faut noter que les première extrémités longitudinales des première et secondes parties 502, 503 sont longitudinalement opposées. De plus, d'une part lesdites bandes 507,511 forment des éléments élastiques et, d'autre part, les ancrages sur la structure 497 peuvent par exemple être réalisés par collage.

Les moyens d'amplification de la déformation subie par la structure porteuse comportent :

- une première poutre 516 disposée longitudinalement et dont une première extrémité 514 est fixée au niveau de l'extrémité longitudinale libre 517 de la troisième partie 509 et sur sa face latérale en regard avec le second ensemble tandis que son autre extrémité longitudinale 518 est attachée à une première plaque 519 disposée à l'intérieur de l'ouverture délimitée par les deux ensembles en forme de U disposés tête bêche et notamment, transversalement, par lesdites bandes 507 et 511.

- une seconde poutre 520 disposée longitudinalement et parallèlement à la première et dont une première extrémité 521 est fixée à l'extrémité longitudinale libre 515 de la seconde partie 503 et sur sa face latérale en regard avec le second ensemble tandis que son autre extrémité longitudinale 522 est attachée à ladite première plaque 519, les première et seconde poutres étant séparées par une gorge débouchante longitudinale 523,

Les premier et second ensembles sont séparés principalement par des gorges débouchantes 531, 523 et la première plaque 519 est séparée desdits ensembles 498, 499 par des gorges débouchantes 533, 534, 535, 536 et 537, ces gorges délimitant la plaque 519.

De nombreuses modifications peuvent être apportées aux exemples décrits précédemment sans sortir du cadre de l'invention. Ainsi, le positionnement des première et seconde poutres peut être différent, ces poutres n'étant pas disposées dans un plan médian ou à proximité de celui-ci.

De plus, certaines parties du microcapteur peuvent ne pas être en silicium. Les roues dentées peuvent par exemple être réalisées en métal et le support constitué du même matériau que la structure porteuse.

Par ailleurs, au moins quatre ensembles de détection avec des seuils différents peuvent être mis en oeuvre sur un support selon la figure 2, voire deux à trois fois plus en les disposant en étage comme dans le cadre de la demande de brevet FR2974410.

De plus, la première plaque 119 peut être remplacée par un élément de type poutre.

## Revendications

1. Microcapteur passif et réversible de déformations selon une direction longitudinale OX d'une structure notamment lors de cycles de températures ou de contraintes mécaniques subis par cette structure, ce microcapteur comportant des moyens de détection et de comptage des cycles de variations de distance entre deux points ou zones d'une structure ainsi que :

   - un support (101) comprenant:

      - une première partie (102) possédant une zone d'ancrage (104) apte à être fixée à un premier desdits deux points ou zones de la structure,
      - une seconde partie (103) possédant une zone d'ancrage (105) apte à être fixée au second desdits deux points ou zones de la structure,
      - une troisième partie (106) disposée longitudinalement entre la première partie et ledit second desdits deux points ou zones de la structure et fixée par une première extrémité longitudinale (107) à la première partie,
      - une quatrième partie (109) disposée longitudinalement entre la seconde partie et ledit premier desdits deux points ou zones de la structure et fixée par une première extrémité longitudinale (110) à la seconde partie,

   - des moyens de détection et de comptage des cycles de variations de distance entre lesdits deux points ou zones d'une structure comportant :
   au moins une première roue dentée de comptage disposée sur l'une desdites première, seconde, troisième ou quatrième parties, au moins une troisième poutre (124) fixée au support (101) et comportant une dent à son extrémité libre, cette dent étant apte à s'engrener sur ladite roue dentée, le support comportant des moyens d'amplification de la valeur d'un déplacement relatif entre lesdites première et seconde parties du support, ces moyens comportant :

      - une première poutre (116) fixée à l'une de ses extrémités à la troisième partie (106) et à son autre extrémité à une première plaque (119),
      - une seconde poutre (120) fixée à l'une de ses extrémités à la quatrième partie (109) et à son autre extrémité à ladite première plaque (119) et tel que la troisième poutre (124) est fixée d'un côté à ladite plaque (119), ou à un élément qui lui est solidaire,

   ladite plaque et les première, seconde et troisième poutres étant agencées de sorte que toute variation de

distance $\Delta\chi$ selon l'axe longitudinale OX entre lesdites première et seconde parties du support produisent un déplacement correspondant $\Delta Y$ de la plaque selon une direction différente et avec $\Delta Y \succ \Delta\chi$ et, préférablement, $\Delta Y \succ 4\Delta\chi$, la troisième partie (106) étant disposée longitudinalement entre les première (102) et seconde (103) parties et reliée par une première extrémité longitudinale (107) à la première partie (102) par un cordon épais (108), la quatrième partie (109) étant disposée longitudinalement entre les première et seconde parties et reliée par une première extrémité longitudinale (110) de la quatrième partie (109) à la seconde partie par un cordon épais (111), cette première extrémité (110) de la quatrième partie (109) étant aussi reliée à la seconde extrémité longitudinale (114) de la troisième partie par un premier cordon (115) au moins en partie mince, et la première extrémité longitudinale de la troisième partie (106) étant aussi reliée à la seconde extrémité longitudinale (112) de la quatrième partie (109) par un second cordon (113) au moins en partie mince, lesdits cordons minces (113, 115) permettant de maintenir le positionnement des première, secondes troisième et quatrième parties pendant la phase de transport puis de fixation du support sur une structure tandis que d'autres premier et second cordons de matière (142, 143), situés entre chaque premier et second cordon mince (113, respectivement 115) et le cordon épais (108, respectivement 111) correspondant, jouent le rôle de ressort permettant ainsi le déplacement sans quasiment de contrainte des première et troisième parties par rapport aux secondes et quatrième parties.

2. Microcapteur passif et réversible selon la revendication 1, **caractérisé en ce que** les première et seconde poutres sont parallèles entre-elles et, préférentiellement, la troisième poutre est disposée perpendiculairement aux deux premières.

3. Microcapteur passif et réversible selon l'une quelconque des revendications 1 à 2, **caractérisé en ce que** le support comporte un plan médian longitudinal et les première et seconde poutres font un angle avec le plan médian compris entre 0 et 45 degrés.

4. Microcapteur passif et réversible selon l'une quelconque des revendications 1 à 3, **caractérisé en ce que** les première et seconde poutres sont disposées du même côté de la plaque.

5. Microcapteur passif et réversible selon l'une quelconque des revendications 1 à 4, **caractérisé en ce que** la plaque et les première, seconde, troisième et quatrième parties du support sont disposées dans un même plan et, avantageusement, la plaque est disposée entre les troisième et quatrième parties du support et délimitée par une gorge débouchante excepté au niveaux des liaisons aves lesdites première et seconde poutres.

6. Microcapteur passif et réversible selon l'une quelconque des revendications 1 à 5, **caractérisé en ce que** les première et seconde poutres longitudinales ont une longueur au moins égale à la moitié de celle des troisième et quatrième parties du support, les mesures étant effectuées selon la direction longitudinale du support.

7. Microcapteur passif et réversible selon l'une quelconque des revendications 1 à 6, **caractérisé en ce que** les moyens de détection et de comptage comportent : une première roue dentée disposée sur la troisième partie du support, la troisième poutre comportant une dent apte à s'engrener sur cette première roue dentée,

- une seconde roue dentée disposée sur la quatrième partie du support, une quatrième poutre disposée transversalement et fixée d'un côté à ladite plaque et comportant, au niveau de son extrémité libre, une dent apte à s'engrener sur ladite seconde roue dentée.

**Patentansprüche**

1. Passiver und umkehrbarer Verformungsmikrosensor nach einer Längsrichtung OX einer Struktur insbesondere bei Temperaturzyklen oder mechanischen Belastungen, denen diese Struktur unterworfen ist, dieser Mikrosensor umfasst Mittel zum Ermitteln und Zählen der Zyklen der Veränderungen des Abstands zwischen zwei Punkten oder Bereichen einer Struktur sowie:

- eine Stütze (101), die folgendes umfasst:

- ein erstes Teil (102), das einen Verankerungsbereich (104) besitzt, der an einem ersten der besagten zwei Punkte oder Bereiche der Struktur befestigt werden kann,
- ein zweites Teil (103), das einen Verankerungsbereich (105) besitzt, der an dem zweiten der besagten zwei Punkte oder Bereiche der Struktur befestigt werden kann,

- ein drittes Teil (106), das in Längsrichtung zwischen dem ersten Teil und besagtem zweiten der besagten zwei Punkte oder Bereiche der Struktur angeordnet ist und mittels eines ersten Längsendes (107) an dem ersten Teil befestigt ist,
- ein viertes Teil (109), das in Längsrichtung zwischen dem zweiten Teil und besagtem ersten der besagten zwei Punkte oder Bereiche der Struktur angeordnet ist und mittels eines ersten Längsendes (110) an dem zweiten Teil befestigt ist,

- Mittel zum Ermitteln und Zählen der Zyklen von Abstandsveränderungen zwischen den beiden Punkten oder Bereichen einer Struktur, die was folgt umfasst:
mindestens einem ersten Zählungszahnrad, das auf dem ersten, zweiten, dritten oder vierten Teil angeordnet ist, mindestens einem dritten Träger (124), der an der Stütze (101) befestigt ist und einen Zahn an seinem freien Ende umfasst, der in das Zahnrad eingreifen kann, die Stütze umfasst Mittel zur Erhöhung des Wertes einer relativen Bewegung zwischen besagtem ersten und zweiten Teil der Stütze, wobei diese Mittel folgendes umfassen:

- einen ersten Träger (116), der mit einem seiner Enden an dem dritten Teil (106) befestigt ist und mit seinem anderen Ende an einer ersten Platte (119),
- einen zweiten Träger (120), der mit einem seiner Enden an dem vierten Teil (109) befestigt ist und mit seinem anderen Ende an besagter erster Platte (119) und wie der dritte Träger (124) an einer Seite an besagter Platte (119) befestigt ist, oder an einem Element, das damit verbunden ist, besagte Platte und der erste, der zweite und der dritte Träger sind so angeordnet, dass jede Abstandsveränderung $\Delta\chi$ nach der Längsachse OX zwischen besagtem ersten und zweiten Teil der Stütze eine entsprechende Bewegung $\Delta y$ der Platte in eine andere Richtung erzeugt und mit $\Delta y > \Delta\chi$ und, vorzugsweise, $\Delta y > 4\ \Delta\chi$,

das dritte Teil (106) ist in Längsrichtung zwischen dem ersten (102) und zweiten (103) Teil angeordnet und an einem ersten Längsende (107) mit dem ersten Teil (102) durch eine dicke Schnur (108) verbunden, das vierte Teil (109) ist in Längsrichtung zwischen dem ersten und zweiten Teil angeordnet und an einem ersten Längsendes (110) des vierten Teils (109) mit dem zweiten Teil durch eine dicke Schnur (111) verbunden, dieses erste Ende (110) des vierten Teils (109) ist auch an dem zweiten Längsende (114) des dritten Teils durch eine erste Schnur (115) verbunden, die mindestens zum Teil dünn ist, und das erste Längsende des dritten Teils (106) ist auch an dem zweiten Längsende (112) des vierten Teils (109) durch eine zweite Schnur (113) verbunden, die mindestens zum Teil dünn ist, wobei die dünnen Schnüre (113, 115) es gestatten, die Positionierung des ersten, zweiten, dritten und vierten Teils während der Transportphase und dann der Phase der Befestigung der Stütze auf einer Struktur beizubehalten, während andere erste und zweite Materialschnüre (142, 143), die zwischen jeder ersten und zweiten dünnen Schnur (113 oder 115) und der entsprechenden dicken Schnur (108 oder 11) gelegen sind, die Rolle einer Feder spielen, wodurch die Bewegung fast ohne Belastungen des ersten und dritten Teils im Vergleich zum zweiten und vierten Teil möglich wird.

2. Passiver und umkehrbarer Mikrosensor nach Anspruch 1, **gekennzeichnet dadurch, dass** der erste und der zweite Träger parallel zueinander sind und, vorzugsweise, ist der dritte Träger senkrecht zu den beiden ersten angeordnet.

3. Passiver und umkehrbarer Mikrosensor nach einem beliebigen der Ansprüche 1 bis 2, **gekennzeichnet dadurch, dass** die Stütze eine Längsmittelebene umfasst und der erste und zweite Träger einen Winkel mit der Mittelebene zwischen 0 und 45 Grad bilden.

4. Passiver und umkehrbarer Mikrosensor nach einem beliebigen der Ansprüche 1 bis 3, **gekennzeichnet dadurch, dass** der erste und der zweite Träger an derselben Seite der Platte angeordnet sind.

5. Passiver und umkehrbarer Mikrosensor nach einem beliebigen der Ansprüche 1 bis 4, **gekennzeichnet dadurch, dass** die Platte und das erste, zweite, dritte und vierte Teil der Stütze in derselben Ebene angeordnet sind und dass vorteilhafterweise die Platte zwischen dem dritten und vierten Teil der Stütze angeordnet und durch eine mündende Kehle begrenzt ist, ausgenommen auf Höhe der Verbindungen mit besagtem ersten und zweiten Träger.

6. Passiver und umkehrbarer Mikrosensor nach einem beliebigen der Ansprüche 1 bis 5, **gekennzeichnet dadurch, dass** der erste und der zweite Längsträger eine Länge mindestens gleich der Hälfte des dritten und vierten Teils der Stütze haben, die Messungen werden in der Längsrichtung der Stütze durchgeführt.

7. Passiver und umkehrbarer Mikrosensor nach einem beliebigen der Ansprüche 1 bis 6, **gekennzeichnet dadurch,**

EP 3 017 278 B1

**dass** die Mittel zum Ermitteln und Zählen folgendes umfassen:

- ein erstes Zahnrad, das auf dem dritten Teil der Stütze angeordnet ist, wobei der dritte Träger einen Zahn umfasst, der in dieses erste Zahnrad eingreifen kann,
- ein zweites Zahnrad, das auf dem vierten Teil der Stütze angeordnet ist, einen vierten Träger, der quer angeordnet und an einer Seite an besagter Platte befestigt ist und an seinem freien Ende einen Zahn umfasst, der in besagtes zweite Zahnrad eingreifen kann.

**Claims**

1. A passive and reversible micro-sensor of deformations along a longitudinal direction OX of a structure, particularly during temperature or mechanical stress cycles experienced by that structure, this micro-sensor comprising means for detecting and counting the cycles of variations in distance between two points or areas of a structure as well as:

   - a support (101) comprising:

     - a first portion (102) having an anchoring area (104) adapted to be attached to a first one of said two points or areas of the structure,
     - a second portion (103) having an anchoring area (105) adapted to be attached to the second one of said two points or areas of the structure,
     - a third portion (106) longitudinally arranged between the first portion and said second one of said two points or areas of the structure and attached by a first longitudinal end (107) to the first portion,
     - a fourth portion (109) longitudinally arranged between the second portion and said first one of said two points or areas of the structure and attached by a first longitudinal end (110) to the second portion,

   - means for detecting and counting the cycles of variations in distance between said two points or areas of a structure comprising:
   at least a first counting toothed wheel arranged on one of said first, second, third and fourth portions, at least a third beam (124) attached to the support (101) and comprising a tooth at its free end, this tooth being adapted to mesh with said toothed wheel, the support comprising means for amplifying the value of a relative movement between said first and second portions of the support, these means comprising:

     - a first beam (116) attached at one of its ends to the third portion (106) and at its other end to a first plate (119),
     - a second beam (120) attached at one of its ends to the fourth portion (109) and at its other end to said first plate (119), and such the third beam (124) is attached on one side to said plate (119), or to a member which is secured thereto, said plate and the first, second and third beams being arranged so that any distance variation Δx along the longitudinal axis OX between said first and second portions of the support produces a corresponding movement Δy of the plate of the tooth along a different direction and with Δy>Δx and, preferably, Δy>4Δx,

   the third portion (106) being longitudinally arranged between the first (102) and second (103) portions and connected by a first longitudinal end (107) to the first portion (102) by a thick cord (108), the fourth portion (109) being longitudinally arranged between the first and second portions and connected by a first longitudinal end (110) of the fourth portion (109) to the second portion by a thick cord (111), this first end (110) of the fourth portion (109) being also connected to the second longitudinal end (114) of the third portion by an at least partially thin first cord (115), and the first longitudinal end of the third portion (106) being also connected to the second longitudinal end (112) of the fourth portion (109) by an at least partially thin second cord (113), said thin cords (113, 115) allowing to maintain the positioning of the first, second, third and fourth portions during the phase of transport and then of attachment of the support on a structure while other first and second material cords (142, 143), located between each first and second thin cords (113, respectively 115) and the corresponding thick cord (108, respectively 111), act as a spring for the movement, almost without constraint, of the first and third portions with respect to the second and fourth portions.

2. The passive and reversible micro-sensor according to claim 1, **characterised in that** the first and second beams are parallel to each other and, preferably, the third beam is arranged perpendicular to the first two.

3. The passive and reversible micro-sensor according to any one of claims 1 to 2, **characterised in that** the support

14

comprises a longitudinal middle plane and the first and second beams form an angle with the middle plane between 0 and 45 degrees.

4. The passive and reversible micro-sensor according to any one of claims 1 to 3, **characterised in that** the first and second beams are arranged on the same side of the plate.

5. The passive and reversible micro-sensor according to any one of claims 1 to 4, **characterised in that** the plate and the first, second, third and fourth portions of the support are arranged in a same plane and, advantageously, the plate is arranged between the third and fourth portions of the support and delimited by a through groove except at the connections with said first and second beams.

6. The passive and reversible micro-sensor according to any one of claims 1 to 5, **characterised in that** the first and second longitudinal beams have a length at least equal to half that of the third and fourth portions of the support, the measurements being taken along the longitudinal direction of the support.

7. The passive and reversible micro-sensor according to any one of claims 1 to 6, **characterised in that** the means for detecting and counting comprise:

- a first toothed wheel arranged on the third portion of the support, the third beam comprising a tooth adapted to mesh with this first toothed wheel,
- a second toothed wheel arranged on the fourth portion of the support, a fourth beam arranged transversely and attached on one side to said plate and having, at its free end, a tooth adapted to mesh with said second toothed wheel.

Fig. 1a

Fig 1b

Fig. 2

Fig. 3 α

Fig. 3b

Fig.4

Fig. 5

EP 3 017 278 B1

Fig. 7

Fig. 6

20

Fig. 8

EP 3 017 278 B1

**RÉFÉRENCES CITÉES DANS LA DESCRIPTION**

**Documents brevets cités dans la description**

- EP 1998145 A

- FR 2974410